# EUROPEAN PATENT SPECIFICATION

(11) **EP 2 157 889 B1**
(45) Date of publication and mention of the grant of the patent: **08.07.2020**
(21) Application number: 08761710.6
(22) Date of filing: 29.05.2008
(51) Int. Cl.: A47G 29/124, A47G 29/126, G07C 9/00

(54) **MAIL DELIVERY SYSTEM**
POSTLIEFERSYSTEM
SYSTÈME DE DISTRIBUTION DE COURRIER

(30) Priority: 30.05.2007 FI 20070427
(43) Date of publication of application: 03.03.2010
(73) Proprietor: Owix Oy, 00210 Helsinki (FI)
(72) Inventor: YLISIRNIÖ, Keijo, 15500 Lahti (FI)
(74) Representative: LEITZINGER OY
(86) International application number: PCT/FI2008/050314
(87) International publication number: WO 2008/145824

(56) References cited:
- EP-B1- 1 044 433
- EP-B1- 1 055 203
- WO-A1-01/41075
- WO-A1-02/31778
- WO-A1-99/40546
- WO-A1-2004/079665
- WO-A2-2007/010445
- FR-A1- 2 738 436
- FR-A1- 2 773 405
- FR-A1- 2 789 203
- GB-A- 2 427 652
- GB-A- 2 427 652
- US-A1- 2003 173 408
- US-A1- 2004 189 440
- US-A1- 2005 006 452

## Description

The application relates to improving security in the slot delivery of mail and to facilitating the work of a mail carrier.

For the delivery of mail and newspapers, the carrier must have access to the hallway of an apartment building and for a trouble-free delivery of small parcels and newspapers, the mail slot should have a large hole. For security reasons, it is nevertheless necessary to keep the slot holes relatively narrow for hindering the use thereof for burglaries. Even a small slot hole does not prevent vandalism as the slot provides an easy way of maliciously pouring for example liquid onto the floor or into the mailbox.

In order to provide access to the hallway, it is necessary either to keep the doors unlocked or to furnish the carrier with a proper key. The use of ordinary keys always involves a risk as the keys can be duplicated or used without authorization. In addition, the carrier finds it inconvenient and awkward to use a multitude of different keys along the round.

It is an objective of the invention to enable a delivery of even sizable parcels conveniently and to control the locking used by a carrier in simple manner, such that keys ended up in wrong hands do not represent a serious security hazard or, for example, robbing the keys from a carrier is not worthwhile. A further objective is to improve the security of a mail slot against burglary and to prevent vandalism.

The invention provides for such a locking feature for mail slots with larger-than-normal holes that the carrier spends no time in opening the slots and, on the other hand, no others but the carrier or an authorized person are able to open the slots. The carrier is in possession of a key operating in a wireless manner, which is equipped with opening codes functional at a certain time interval for relevant locks. The re-serialization of locks themselves is not necessary in case of losing a key, nor do the locks even in this case require any separate communication link for access control.

FR 2773405 discloses a method and system for controlling access to a resource limited to certain time frames by means of an electronic key and an electronic lock. The electronic key is provided with a real time clock supplying a current time value to the electronic lock within a predetermined time period. Access of the key to the lock is prohibited if the current time value transmitted from the key to the lock is outside the predetermined time period or before a reference value memorized in the lock. There is no mention of mail slot.

WO2004/079665 discloses a mail box having a lockable door or lid and person identifying means. After the mail box has received valid identifying information of a person, the door is automatically opened and a letter can be put into the mail box.

GB2427652 discloses a letter box for a door, said letter box comprising a frame and a obturator member which moves relative to the frame between open and closed positions to enable and to prevent, respectively, the delivery of documents through an aperture in the door. The letter box is provided with locking means for causing the obturator member to be locked in the closed position, and receiver means for causing the locking means to operate so that the obturator member can be moved to the open position. The receiver means is a wireless receiver means which operates consequent upon receiving a signal from a remote hand-held hand-operable transmitter means.

A system according to the invention will now be described with the aid of the accompanying drawing.

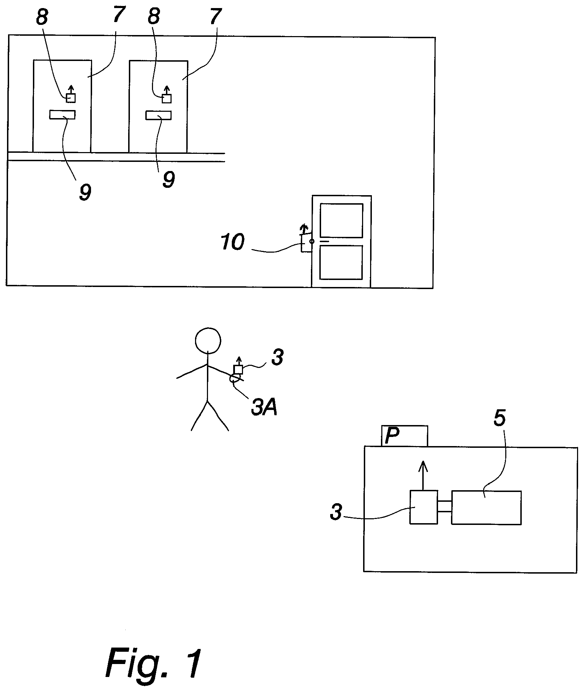

Fig. 1 shows the system in a schematic view.

Fig. 1 illustrates the elements for a system of the invention in a schematic view. The carrier is in possession of a wireless key 3, which further features a fastening means 3a, presented in the figure as a wristband. The wristband is provided for example with a capacitive sensor or an element responsive to the wristband being unclasped, which enables detecting a removal from the wrist or an unclasping of the wristband. Unclasping the wristband or the like causes the inactivation of codes stored in the key. Alternatively or additionally, the key can be further equipped with a button, which enables erasing the codes stored therein.

The wireless keys 3 are loaded at a post office or elsewhere, for example on the premises of a building co-op responsible for issuing the keys. Loading is performed by means of a charger 5 provided with elements for charging batteries and further for establishing a time-stamped digitally signed code and feeding it into the key 3. The code is only functional for a certain limited time and, thus, its duplication or cracking does not jeopardize the actual locking system. The code is established in a prior known manner by using a secret signature key of the delivery organization. Hence, the locks need not be updated with codes, even if a key had been handed over to a wrong person or had become stolen. Preferably, the key is loaded with a key code which is only functional for a few hours. Since the right to use the key is only in possession of a specific person and handing over or snatching the key off this particular person is not feasible, the key system provides a remarkably high-standard overall security. The mail carrier has for example a period of two hours for delivering the mail within a specified district. The time allocated for delivery need not begin right from the loading process, but the key can also be loaded well in advance. The carrier is also able, after completing the round, to disengage the wireless key 3 from his/her wrist for its inactivation. Thus, there is always certain knowledge as to who is in possession of active keys, and after use, the keys will be inactive until the next loading session. Functioning in a wireless mode, the key need not be visible as a radio-activated key may also be concealed inside the clothing. Mail slots 9 existing in apartment doors 7 are provided with an electronic control device for slot locking means 8, including a public encryption key, required for reading a signature and issued by the postal service or some other delivery organization. The public encryption key does not make it possible to deduce an encryption key used by the actual key and, thus, the unpacking of a lock does not reveal the encryption key needed for establishing the code of a wireless key. In addition, the outer door of a hallway and other doors along the round will be fitted with wireless electronic locks 10 for admitting the carrier into the hallway.

The slots 9 are strictly flush with the door surface and sealed to the frame in such a way that not even liquids can be poured through the slot into the apartment. Thus, the slots 9 are also soundproof and gastight when not in use. A non-protrusive slot is also difficult to break. The slots are preferably larger than the present ones, allowing, for example, the passage of items with a thickness of 10 cm or 5 cm. Hence, the slot can enable a trouble-free delivery of normal small parcels and even thick newspapers and catalogues. On the other hand, the delivery of junk mail or unauthorized mail is not feasible, whereby even the ad distributors need a permission to deliver from the occupant of an apartment or the management of a building. In a preferred case, services associated with ad distribution or, for example, with building maintenance shall furnish the wireless key with an identifier, whereby various services can be distinguished from each other and the occupant of an apartment is able, for example, to deny a specific delivery service. This denial can also be set up, for example, for a specified number of days, such that, for example, the delivery of a newspaper is suspended for a few days.

In order to facilitate delivery suspensions and, for example, the delivery of a newspaper, the slot can be provided with a display means, for example an indicator light, which advises whether for example a newspaper is to be delivered that day to this particular address. The control of an indicator light may also come from a key, i.e. the key can remember the addresses and request a switch-on of the indicator light as the slot is opened. The display may also be included in a key, whereby the key indicates which slot one is standing next to at the moment and what should be delivered or not delivered through this particular slot. The key may also contain some memory for keeping a log, enabling an acknowledgement to be received about the delivery of a specific package. The package can be identified for example from a bar code, a 2D code or the like. Most preferably, the code reader is included in the key 3. This provides a confirmation of the fact that the carrier at least read the code while making a delivery at the discussed slot. This also serves to prevent a misdelivery or reminds of a lapse of delivery or of the necessity of reading the code of a delivery coming to this particular address.

The key used by the carrier may also function as a communicator for electronics included in the slot locking means 8. The locks can be provided with a display screen, which thereby presents messages transmitted by way of a wireless communication link. For example, messages relevant to the maintenance of an apartment can thus be communicated in a hard-to-miss manner. The lock may also communicate messages from a customer to a wireless key, regarding for example a suspension of newspaper delivery for the following day.

Because the system according to the invention enables stopping unauthorized delivery, it is possible to request a payment for ad deliveries. This provides a means of controlling extra nuisance caused by delivery.

Since the lockable hole of a mail slot can be made considerably larger than the present ones, the slot facilitates delivery work significantly. On the other hand, when dealing with lockable mail slots, the management of keys is generally a problem, and when dealing with mechanical keys, the actual working of a key claims too much of the carrier's time. The system according to the invention enables an adequate security and convenience in the management of keys, and by virtue of a wireless continuously transmitting key, the slot opens every time the carrier approaches it and the slot owner has not ordered, for example, a suspension of deliveries.

The system employs a public key encryption, for example a RSA- or IDEA-algorithm. The public key encryption functions in such a way that encryption and decryption are performed by using different keys. That is, in this case the delivery organization or the management of a building is in possession of a secret key used for encrypting or signing the opening codes included in the keys. Thus, the codes may contain a specific-format message, expressing for example a delivery organization, a type of delivery, a permitted time of delivery, and a possible message for the screen of a lock. The locks have a public key capable of verifying that the code of a wireless key originates from the owner of a secret key. In addition, a second pair of keys can be used for ensuring the communication between lock and key. Hence, the lock transmits an encrypted code containing a variable component, to which the wireless key responds with a message encrypted by its own secret key. This way, the lock is able to verify authenticity of the key. The lock may also be provided with a secret key, enabling the lock to ensure the authenticity of its own message to the key. This makes it impossible to commit, even by real-time hijacking, a criminal action which involves hijacking and using messages of a lock and a key for opening another lock. It is possible to use security processors for the safekeeping of secret keys. It should be noted that the secret key code of a lock only enables a simulation of this particular lock for a wireless key. All that is managed by unpacking a lock and hijacking a code is to simulate this particular lock towards the carrier's wireless key, but the code needed for unlocking other locks cannot be successfully obtained from the wireless key by means of the duplicated code. The codes can also be stored in a security processor, making the determining thereof next to impossible. An encryption key stored in a security processor makes it possible to use one and the same secret encryption key in all locks. Hence, the security processor conceals at least some of the message transmitted to a key or the message is signed by the security processor. Thus, the security processor can supplement the message with a lock identifier, whereby the messages of all locks can be deciphered by means of one and the same public key, yet the locks are nonetheless reliably identifiable.

The only code of the system, which under no circumstances can be allowed to leak to the knowledge of outsiders, is the actual delivery organization's secret code key, which is used for producing codes for the wireless key 3. The codes of a wireless key are always time-limited and, in addition, the key is preferably provided with an element 3A used for inactivation, capable of detecting a removal of the key for example from the carrier's wrist. The delivery organization's secret code, as such, need never be transferred anywhere from a computer used for its safekeeping. All that is produced by the secret code are encrypted fixed-term messages for the use of a key. The secret code itself can be located for example in a secure server, which supplies the codes to be loaded in keys.

In the case of using lock-specific secret key codes, a wireless key will be loaded with the locks' public keys. These are not critical in terms of security, enabling only to make sure that copying, even in real time, a dialogue between key and lock does not enable the opening of other locks or lock electronics and that studying the data loaded in a lock does not enable the opening of other locks, even by hijacking bits of communication between a lock and a legitimate wireless key.

The handshaking between key and lock can be implemented by at least two protocols. A first protocol is to provide the key with a time-stamped and encrypted key code. This means that the key-transmitted code changes all the time and the locks compare the code of the key and a time contained therein with their own clock. The time-stamped code itself has been encrypted by a secret signature key of whoever has issued the key and the locks are familiar with the respective public key capable of confirming authenticity of the signature. As a result, it can be made certain that a radio code picked up from the airway between a wireless lock and key is not functional for longer than maybe a minute or two. In other words, the carrier has good chances to detect the use of a hijacked code. If a precise synchronization of the clocks is used, for example by means of a radio beacon or by interlocking with the time of legitimate keys having a sufficiently precise clock, the time window for opening the locks can be well reduced to the matter of seconds. Thus implemented, the locks need transmit nothing, yet the clocks thereof must be precise or the clock must be synchronized with the clock of the keys and the clocks of those issuing the keys must be kept precisely at the same time.

In terms of security, a more advisable protocol is the above-described approach, in which every lock is provided with a secret key or identifier, enabling an identification of the lock by a wireless key. In this case, the wireless key 3 may refuse to shake hands with a lock which seems to be in an incorrect location with respect to a normal round. Thus, the locks can be provided, for example, with a hallway- or doorspecific ordinal encoded in a message to be transmitted to the key, such that the key is able to confirm before handshaking that the code in fact originates from a lock existing in this particular hallway. Consequently, the code of a wireless key is remarkably difficult to hijack by receiving a door code and by sending over a distance to a key for further transmission and by hijacking the key's response to be sent on to the lock, because the wireless key is able to detect, for example, the fact that that the lock's handshaking originates from a lock existing on a different floor or in a different hallway.

The wireless Bluetooth key may also be a mobile telephone and its software.

In the event that several mailboxes are installed in a cluster, the locking of mail slots 9 can be effected by means of a joint locking device. In this case, the mail carrier can be informed of delivery suspensions for example by a red or green led, indicating which slot is not to receive for example a newspaper or for which slot there is mail to be delivered. The result of this is a less expensive mechanical locking and still the carrier can be instructed for example about suspensions in deliveries.

The locking means for mail slots must have a power supply and a battery or accumulator backup. The battery can be preferably used also for illumination. When the mail carrier's key is within the operating range, the light is switched on in case the hallway is dark. A LED lamp, for example, provides enough illumination to enable reading and handling mail in its light during a power failure. Since the lamp is only switched on for a carrier or some other person in possession of the key, the batteries do not consume power unnecessarily. The slot can be further installed with other security equipment, such as a camera or a doorbell or a combination thereof. Since the slot is most preferably sealed, it is preferred from the standpoint of anti-fire and anti-burglary precautions to not have many penetrations in the door.

## Claims

1. Door (7) of a dwelling comprising an openable mail slot (9) mounted on the door and provided with slot locking means (8) storing a public encryption key and being configured to
- wirelessly receive and verify a time limited opening code digitally signed or encrypted by the corresponding secret key and transmitted by a short-range wireless key (3) of a mail carrier and
- to control the mail slot (9) such that the mail slot (9) is opened automatically by said slot locking means (8) without the carrier's action when the carrier's wireless key (3) is brought to the immediate vicinity of the mail slot (9) and when the opening code received from said carrier's wireless key (3) has been successfully verified by the slot locking means (8) by means of the public encryption key stored in the slot locking means (8), **characterized in that** the mail slot (9), in a locked condition, is strictly flush with the door surface and sealed to its frame to prevent the pouring of liquids in through the slot, and, in an opened condition, the mail slot allows the delivery of parcels having a thickness of at least 5 cm.

2. A door according to claim 1, **characterized in that** in association (3) with the mail slot (9) is a display for presenting delivery-relevant information to the carrier or for indicating to the carrier a suspension of delivery.

3. A door according to claim 1, **characterized in that** the mail slot (9) is provided with means for presenting messages communicated to the mail slot owner by way of a communication link present in the key.

4. A door according to any of the preceding claims, **characterized in that** in association with the mail slot (9) is also a lighting fixture for the delivery of mail, and the lighting fixture activates in response to being activated by at least the key (3).

## Patentansprüche

1. Tür (7) einer Wohnung, umfassend einen aufklappbaren Postschlitz (9), der an der Tür angebracht ist und mit einem Schlitzverriegelungsmittel (8) versehen ist, das einen öffentlichen Verschlüsselungsschlüssel speichert und konfiguriert ist zum
- drahtlosen Empfangen und Verifizieren eines zeitlich begrenzten Öffnungscodes, der mit dem entsprechenden geheimen Schlüssel digital signiert oder verschlüsselt ist und mittels eines Kurzstreckenfunkschlüssels (3) eines Postträgers übertragen wurde, und
- Steuern den Postschlitzes (9) derart, dass der Postschlitz (9) ohne die Aktion des Trägers durch das Schlitzverriegelungsmittel (8) automatisch geöffnet wird, wenn der Funkschlüssel (3) des Trägers in die unmittelbare Nähe des Postschlitzes (9) gebracht ist und wenn der von dem Funkschlüssel (3) des Trägers empfangene Öffnungscode durch das Schlitzverriegelungsmittel (8) mittels des in dem Schlitzverriegelungsmittel (8) gespeicherten öffentlichen Verschlüsselungsschlüssels erfolgreich verifiziert wurde, **dadurch gekennzeichnet,**
**dass** der Postschlitz (9) in einem verschlossenen Zustand streng bündig mit der Türoberfläche ist und an seinem Rahmen abgedichtet ist, um das Einströmen von Flüssigkeiten durch den Schlitz zu verhindern, und der Postschlitz in einem geöffneten Zustand die Lieferung von Paketen mit einer Dicke von mindestens 5 cm ermöglicht.

2. Tür nach Anspruch 1, **dadurch gekennzeichnet, dass** in Verbindung (3) mit dem Postschlitz (9) eine Anzeige vorhanden ist, um dem Träger lieferrelevante Informationen darzustellen oder dem Träger eine Lieferungsaussetzung anzuzeigen.

3. Tür nach Anspruch 1, **dadurch gekennzeichnet, dass** der Postschlitz (9) mit Mitteln zum Darstellen von Nachrichten versehen ist, die dem Postschlitzbesitzer über eine in dem Schlüssel vorliegende Kommunikationsverbindung mitgeteilt werden.

4. Tür nach einem der vorhergehenden Ansprüche, **dadurch gekennzeichnet, dass** in Verbindung mit dem Postschlitz (9) auch ein Beleuchtungskörper für die Lieferung von Post vorhanden ist, und der Beleuchtungskörper in Reaktion auf eine Aktivierung mindestens durch den Schlüssel (3) aktiviert wird.

## Revendications

1. Porte (7) d'un logement comprenant une boîte aux lettres ouvrable (9) montée sur la porte et pourvue de moyens de verrouillage de boîte (8) stockant une clé de chiffrement publique et étant configurée pour
- recevoir sans fil et vérifier un code d'ouverture limité dans le temps numériquement signé ou chiffré par la clé secrète correspondante et transmis par une clé sans fil de courte portée (3) d'un facteur et
- commander la boîte aux lettres (9) de sorte que la boîte aux lettres (9) soit automatiquement ouverte par ledit moyen de verrouillage de boîte (8) sans aucune action du facteur lorsque la clé sans fil (3) du facteur est amenée à proximité immédiate de la boîte aux lettres (9) et lorsque le code d'ouverture reçu en provenance de ladite clé sans fil (3) du facteur a été vérifié avec succès par le moyen de verrouillage de boîte (8) au moyen de la clé de chiffrement publique stockée dans le moyen de verrouillage de boîte (8),
**caractérisée en ce que** la boîte aux lettres (9), dans un état verrouillé, est strictement à niveau avec la surface de porte et scellée à son encadrement pour empêcher le déversement de liquides dans la boîte, et, dans un état ouvert, la boîte aux lettres permet la distribution de colis ayant une épaisseur d'au moins 5 cm.

2. Porte selon la revendication 1, **caractérisée en ce que**, en association (3) avec la boîte aux lettres (9), il y a un affichage pour présenter des informations pertinentes à la distribution au facteur ou pour indiquer au facteur une suspension de distribution.

3. Porte selon la revendication 1, **caractérisée en ce que** la boîte aux lettres (9) est pourvue de moyens pour présenter des messages communiqués au propriétaire de la boîte aux lettres par le biais d'une liaison de communication présente dans la clé.

4. Porte selon l'une quelconque des revendications précédentes, **caractérisée en ce que**, en association avec la boîte aux lettres (9), il y a également un appareil d'éclairage pour la distribution du courrier, et l'appareil d'éclairage s'active en réponse à son activation par au moins la clé (3).
